(19) Europäisches Patentamt
European Patent Office
Office européen des brevets

(11) EP 1 587 320 A2

(12) EUROPEAN PATENT APPLICATION

(43) Date of publication:
19.10.2005 Bulletin 2005/42

(51) Int Cl.7: H04N 7/16, H04N 7/24

(21) Application number: 05004926.1

(22) Date of filing: 07.03.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 12.03.2004 JP 2004071441

(71) Applicant: NTT DoCoMo, Inc.
Tokyo 100-6150 (JP)

(72) Inventor: Yamamori, Osamu
Intellectual Property Department
Chiyoda-ku Tokyo 100-6150 (JP)

(74) Representative: Grosse, Wolfgang et al
Patent- & Rechtsanwälte
Grosse, Bockhorni & Schumacher,
Forstenrieder Allee 59
81476 München (DE)

(54) Mobile terminal, audience information collection system, and audience information collection method

(57) In order to more precisely grasp actual audience situations of a user through accumulation of broadcast reception qualities in combination with audience information in a mobile terminal, this mobile terminal 2 has a wave receiver 21 for receiving a broadcast wave, a signal reproducer 22 for acquiring a broadcast signal by demodulating the broadcast wave received by the wave receiver 21, and thereafter reproducing the broadcast signal, a level measuring part 24 for measuring a reception level of the broadcast wave received by the wave receiver 21, an information generator 28 for generating audience information containing an audience time being a time of reproduction by the signal reproducer 22, and the reception level at the audience time measured by the level measuring part 24, and an information transmitter 30 for transmitting the audience information generated by the information generator 28.

Fig.1

**Description**

BACKGROUND OF THE INVENTION

Field of the Invention

The present invention relates to a mobile terminal, an audience information collection system, and an audience information collection method.

Related Background of the Invention

As communication terminals such as cell phones are becoming highly sophisticated, the recent communication terminals come to be equipped with the reception and reproduction function of television broadcasting and radio broadcasting. Collection of broadcast audience situations in such communication terminals is more meaningful in a sense of knowing individual audience tendencies than that in the case aimed at television receivers set in homes.

For example, one of techniques of collecting the broadcast audience situations of this type is the audience information collection system described in Japanese Patent Application Laid-Open No. 2002-344933. In this audience information collection system, when receiving a broadcast program, a broadcast receiving terminal such as a cell phone automatically transmits an audience day and time, location information of the cell phone, and an audience profile to an audience information server installed in a network, and the audience information server receives and stores these information items.

SUMMARY OF THE INVENTION

In the audience information collection system described in the above Application Laid-Open No. 2002-344933, however, the time of reception of a data broadcast stream of digital broadcasting is transmitted as the audience information, and the information provided is merely information as a so-called activity history of the cell phone. On the other hand, reception environments of airwaves in the cell phone vary with time because of its mobility, and thus broadcasting is not always normally received and reproduced by the cell phone.

The present invention has been accomplished in view of the above problem and an object of the invention is to provide a mobile terminal, an audience information collection system, and an audience information collection method capable of more precisely grasping actual audience situations of a user by accumulating quality information indicating the broadcast reception quality in combination with the audience information in the mobile terminal.

In order to solve the above problem, a mobile terminal of the present invention comprises wave receiving means for receiving a broadcast wave; signal reproducing means for acquiring a broadcast signal by demodulating the broadcast wave received by the wave receiving means, and thereafter reproducing the broadcast signal; level measuring means for measuring a reception level of the broadcast wave received by the wave receiving means; information generating means for generating audience information containing an audience time, which is a time of reproduction by the signal reproducing means, and the reception level at the audience time measured by the level measuring means; and information transmitting means for transmitting the audience information generated by the information generating means.

In the mobile terminal as described above, the wave receiving means receives a broadcast wave, then the signal reproducing means demodulates and reproduces the broadcast wave, and the level measuring means measures the reception level of the broadcast wave. On that occasion, the information generating means generates the audience information containing the audience time and the reception level at that time, and thereafter the information transmitting means transmits the audience information. This makes it feasible to provide a wave reception situation in viewing/listening of a broadcast program in the mobile terminal.

Preferably, the level measuring means additionally measures a noise level upon reception of the broadcast wave by the wave receiving means, and the information generating means generates the audience information containing the audience time, and the reception level at the audience time and the noise level measured by the level measuring means. In this case, the wave reception situation in viewing/listening of broadcasting can be more flexibly grasped even if the noise level varies in an environment where the mobile terminal is located.

Another mobile terminal of the present invention comprises wave receiving means for receiving a broadcast wave; signal reproducing means for acquiring a broadcast signal by demodulating the broadcast wave received by the wave receiving means, and thereafter reproducing the broadcast signal; level measuring means for measuring a reception level of the broadcast wave received by the wave receiving means; state determining means for comparing the reception level measured by the level measuring means, with a predetermined threshold, thereby determining a quality of reception of the broadcast wave; information generating means for generating audience information containing an audience time, which is a time of reproduction by the signal reproducing means, and the quality of reception at the audience time determined by the state determining means; and information transmitting means for transmitting the audience information generated by the information generating means.

In the mobile terminal as described above, the wave receiving means receives a broadcast wave, thereafter the signal reproducing means demodulates and reproduces the broadcast wave, and the level measuring means measures the reception level of the broadcast wave. On that occasion, the state determining means compares the reception level with the threshold to determine the quality of reception of the wave, the information generating means generates the audience information containing the audience time and the quality of reception at the time, and thereafter the information transmitting means transmits the audience information. This makes it feasible to provide a wave reception situation in viewing/listening of broadcasting according to a receiver type, a communication system, etc. in the individual mobile terminal.

Preferably, the level measuring means additionally measures a noise level upon reception of the broadcast wave by the wave receiving means, and the state determining means compares a ratio of the reception level and the noise level measured by the level measuring means, with a predetermined threshold, thereby determining the quality of reception. This makes it feasible to more flexibly grasp the wave reception situation in viewing/listening of broadcasting according to a receiver type, a communication system, etc. in the individual mobile terminal even if the mobile terminal is located in a noisy environment.

Furthermore, the mobile terminal is also preferably configured in a configuration further comprising location acquiring means for acquiring location information of the host mobile terminal at the audience time, wherein the information transmitting means transmits the audience information which contains the location information acquired by the location acquiring means. In this configuration, the location of the user in viewing/listening of broadcasting is transmitted, whereby an audience situation in each audience location can be provided.

Furthermore, the mobile terminal is also preferably configured in a configuration further comprising speed detecting means for detecting a moving speed of the host mobile terminal at the audience time, wherein the information transmitting means transmits the audience information which contains the moving speed detected by the speed detecting means. In this case, the moving state of the user in viewing/listening of broadcasting is transmitted, whereby it is feasible, for example, to provide an audience situation in each audience location or in each transportation means used in viewing/listening.

An audience information collection system of the present invention comprises the mobile terminal described above, and a server apparatus, and the server apparatus comprises: receiving means for receiving the audience information transmitted from the mobile terminal; and information storing means for storing the audience information received by the receiving means, in association with information to specify the mobile terminal.

An audience information collection method of the present invention comprises a wave receiving step wherein a mobile terminal receives a broadcast wave; a signal reproducing step wherein the mobile terminal acquires a broadcast signal by demodulating the broadcast wave received in the wave receiving step, and thereafter reproduces the broadcast signal; a level measuring step wherein the mobile terminal measures a reception level of the broadcast wave received in the wave receiving step: an information generating step wherein the mobile terminal generates audience information containing an audience time, which is a time of reproduction in the signal reproducing step, and the reception level at the audience time measured in the level measuring step; an information transmitting step wherein the mobile terminal transmits the audience information generated in the information generating step; a receiving step wherein a server apparatus receives the audience information transmitted in the information transmitting step; and an information storing step wherein the server apparatus stores the audience information received in the receiving step, in association with information to specify the mobile terminal.

In the audience information collection system and the audience information collection method described above, the mobile terminal receives a broadcast wave, thereafter demodulates and reproduces the broadcast wave, and measures the reception level of the broadcast wave. On that occasion, the mobile terminal generates the audience information containing the audience time and the reception level at that time, and thereafter transmits the audience information to the server apparatus, and the server apparatus stores the received audience information in association with the information to specify the mobile terminal. This permits the server apparatus to store and provide a wave reception situation in viewing/listening of a broadcast program in the mobile terminal.

Another audience information collection system of the present invention comprises the mobile terminal described above, and a server apparatus, and the server apparatus comprises: receiving means for receiving the audience information transmitted from the mobile terminal; state determining means for comparing the reception level included in the audience information, with a predetermined threshold, thereby determining a quality of reception of the broadcast wave at the audience time specified by the audience information; and information storing means for storing the audience information received by the receiving means, in association with the quality of reception determined by the state determining means and with information to specify the mobile terminal.

Another audience information collection method of the present invention comprises a wave receiving step wherein a mobile terminal receives a broadcast wave; a signal reproducing step wherein the mobile terminal acquires a broadcast signal by demodulating the broadcast wave received in the wave receiving step, and thereafter reproduces the broadcast signal; a level measuring step wherein the mobile terminal measures a reception level of the broadcast wave received in the wave receiving step; a state determining step wherein the mobile terminal compares the reception level measured in the level measuring step, with a predetermined threshold, thereby determining a quality of reception of the broadcast wave; an information generating step wherein the mobile terminal generates audience information containing an audience time, which is a time of reproduction in the signal reproducing step, and the quality of reception at the audience time determined in the state determining step; an information transmitting step wherein the mobile terminal transmits the audience information generated in the information generating step; a receiving step wherein a server apparatus receives the audience information transmitted in the information transmitting step; and an information storing step wherein the server apparatus stores the audience information received in the receiving step, in association with information to specify the mobile terminal.

In the audience information collection system and the audience information collection method described above, the mobile terminal receives a broadcast wave, thereafter demodulates and reproduces the broadcast wave, and measures the reception level of the broadcast wave. Thereafter, the reception level is compared with the threshold to determine the quality of reception of the wave, and the audience information containing the audience time and the reception quality is stored in association with the information to specify the mobile terminal, in the server apparatus. This permits the server apparatus to store and provide a wave reception situation in viewing/listening of broadcasting according to a receiver type, a communication method, etc. in the individual mobile terminal.

Another audience information collection system of the present invention comprises the mobile terminal described above, and a server apparatus, and the server apparatus comprises: receiving means for receiving the audience information transmitted from the mobile terminal; state determining means for comparing a ratio of the reception level and the noise level included in the audience information, with a predetermined threshold, thereby determining a quality of reception of the broadcast wave at the audience time specified by the audience information; and information storing means for storing the audience information received by the receiving means, in association with the quality of reception determined by the state determining means and with information to specify the mobile terminal.

In this audience information collection system, the mobile terminal receives a broadcast wave, thereafter demodulates and reproduces the broadcast wave, and measures the reception level and the noise level of the broadcast wave. On that occasion, the mobile terminal generates the audience information containing the audience time, the reception level at the time, and the noise level, and transmits the audience information to the server apparatus, and the server apparatus compares the ratio of the reception level and the noise level with the threshold to determine the quality of reception of the wave, and stores the audience information in association with the reception quality and the information to specify the mobile terminal. This permits the server apparatus to store and provide a wave reception situation in viewing/listening of broadcasting according to a receiver type, a communication system, etc. in the individual mobile terminal even if a received wave environment varies in diverse ways.

Another audience information collection system of the present invention comprises the mobile terminal described above, and a server apparatus, and the server apparatus comprises: route storing means for storing route information of transportation means; receiving means for receiving the audience information transmitted from the mobile terminal; movement determining means for determining a state of movement of the mobile terminal at the audience time specified by the audience information, based on the location information and the moving speed included in the audience information and based on the route information stored in the route storing means; and information storing means for storing the audience information received by the receiving means, in association with the state of movement determined by the movement determining means and with information to specify the mobile terminal.

In this audience information collection system, the mobile terminal transmits the audience information containing the location information and the moving speed of its own in viewing/listening of broadcasting, and the server apparatus, after receiving the audience information, determines the state of movement of the mobile terminal, based on the location information and the moving speed and based on the route information stored in the route storing means, and stores the audience information in association with the state of movement and with the information to specify the mobile terminal. This permits the server apparatus to store and provide an audience situation per place or per transportation means, for example.

According to the mobile terminal of the present invention, the broadcast reception quality is stored together with the audience information in the mobile terminal, whereby the actual audience situation of the user can be more precisely grasped.

BRIEF DESCRIPTION OF THE DRAWINGS

Fig. 1 is a schematic configuration diagram of an audience information collection system showing a first embodiment of the present invention.

Fig. 2 is an illustration showing an example of data stored in an audience information storage in Fig. 1.

Fig. 3 is an illustration showing an example of data stored in a personal information storage in Fig. 1.

Fig. 4 is an illustration showing an example of data stored in a program guide storage in Fig. 1.

Fig. 5 is an illustration showing a relationship of reception levels and CN ratios with reception qualities to be determined by a state determiner.

Fig. 6 is an illustration showing a location relation between a route indicated by route information and a mobile terminal.

Fig. 7 is an illustration showing an example of audience information stored in an information storage in Fig. 1.

Fig. 8 is a sequence diagram showing the operation of the audience information collection system according to the first embodiment.

Fig. 9 is a schematic configuration diagram of an audience information collection system showing a second embodiment of the present invention.

Fig. 10 is an illustration showing an example of data stored in an audience information storage in Fig. 9.

Fig. 11 is a sequence diagram showing the operation of the audience information collection system according to the second embodiment.

DESCRIPTION OF THE PREFERRED
EMBODIMENTS

Embodiments of the present invention will be described below with reference to the drawings. The same elements will be denoted by the same reference symbols throughout the drawings, without redundant description.

[First Embodiment]

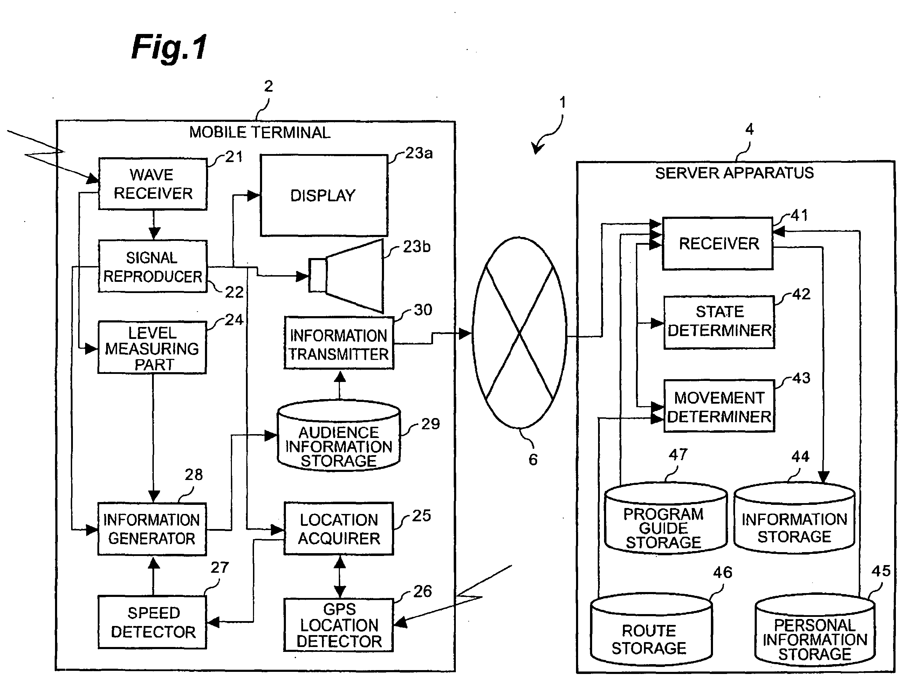

First, a configuration of an audience information collection system according to the first embodiment of the present invention will be described. Fig. 1 is a schematic configuration diagram of audience information collection system 1 showing the first embodiment of the present invention.

The audience information collection system 1 is a network system for collecting and storing audience information about digital television broadcasting viewed in the mobile terminal. The audience information collection system 1 is comprised of mobile terminal 2 and server apparatus 4, and the mobile terminal 2 and the server apparatus 4 are able to transmit and receive data to and from each other through network 6 composed of a mobile telecommunications network, a LAN (Local Area Network), and a WAN (Wide Area Network). In Fig. 1 only one mobile terminal is depicted for convenience' sake of description, but it is needless to mention that the system may include other mobile terminals not shown.

The mobile terminal 2 is a communication terminal capable of reception and reproduction of digital television broadcasting, as well as audio transmission and packet data transmission by a mobile telecommunications system. Examples of such communication terminals include cell phones, PHSs (Personal Handyphone Systems), PDAs (Personal Digital Assistants), portable personal computers, and so on. This mobile terminal 2 has a display 23a and a speaker 23b as output means, and also incorporates other functional components such as a wave receiver (wave receiving means) 21, a signal reproducer (signal reproducing means) 22, a level measuring part (level measuring means) 24, a location acquirer (location acquiring means) 25, a GPS location detector 26, a speed detector (speed detecting means) 27, an information generator (information generating means) 28, an audience information storage 29, and an information transmitter (information transmitting means) 30. Each of the components will be described below in detail.

The wave receiver 21 is a part that receives a broadcast wave for digital television broadcasting. This broadcast wave has a plurality of carrier waves multiplexed by the OFDM (Orthogonal Frequency Division Multiplexing) method or the like. Each of the carrier waves corresponds to a specific program channel of digital television broadcasting, and is one for carrying a transport stream being a digital signal in which audio data, video data, and digital data are multiplexed, in a coded state by the QPSK (Quadrature Phase Shift Keying) method or the like. The audio data included in the transport stream is encoded by the MPEG-2 AAC (Moving Picture Experts Group 2 Advanced Audio Coding) method or the like, and the video data is encoded by the MPEG-4 (Moving Picture Experts Group 4) method, the H.264 method, or the like.

Receiving an audience start command of digital television broadcasting and a selected program channel from an operation button or the like, the wave receiver 21 receives a broadcast wave in a relevant frequency band, extracts a carrier wave corresponding to the program channel from the broadcast wave, and outputs it to the signal reproducer 22. When receiving an audience end command of digital television broadcasting from an operation button or the like, the wave receiver 21 terminates reception of the broadcast wave. On the other hand, receiving a change request of the program channel, the wave receiver 21 once terminates reception of the broadcast wave and starts reception of another broadcast wave corresponding to a new program channel. Furthermore, for measurement of a level of the broadcast wave received, the wave receiver 21 also performs output of the broadcast wave to the level measuring part 24.

The signal reproducer 22 is a part that acquires video data and audio data as a broadcast signal by demodulating a carrier wave outputted from the wave receiver 21, and thereafter reproduces the broadcast signal. More specifically, the signal reproducer 22 demodulates the carrier wave to extract a transport stream, performs an error correction process, and thereafter separates the audio data, video data, and digital data from the transport stream. Then the signal reproducer 22 decodes and reproduces the video data on the display 23a, and decodes and reproduces the audio data on the speaker 23b. On that occasion, the signal reproducer 22 outputs trigger signals indicating a reproduction start and a reproduction end to the information generator 28 and to the location acquirer 25, at a reproduction start time and at a reproduction end time of the broadcast signal, and outputs the reproduced program channel to the information generator 28.

The level measuring part 24 is a part that measures a reception level and a noise level of the broadcast wave outputted from the wave receiver 21. The reception level of the broadcast wave measured herein is a total power of the received wave including a plurality of carrier waves multiplexed by the OFDM method or the like. The noise level measured herein is a received power of noise included in the broadcast wave. The level measuring part 24 sequentially measures the reception level C [dBm] of the broadcast wave and the level N [dBm] of noise included in the broadcast wave, and outputs them to the information generator 28.

The location acquirer 25 is a part that acquires location information of the host mobile terminal during a period (audience duration) from the reproduction start time to the reproduction end time of digital television broadcasting in accordance with the trigger signals outputted from the signal reproducer 22. Namely, the location acquirer 25 requests the GPS location detector 26 to detect the location about the mobile terminal 2 at intervals of a fixed time T1 from the reproduction start time. In addition, the location acquirer 25 also requests the GPS location detector 26 to detect the location about the mobile terminal 2 at the reproduction end time. Then the location acquirer 25 outputs the location information (X, Y) (X: longitude information, Y: latitude information) of the mobile terminal 2 detected by the GPS location detector 26 at each time, to the speed detector 27.

The GPS location detector 26 detects the location of the mobile terminal 2 to generate the location information (X, Y), in response to a location detection request from the location acquirer 25. The GPS location detector 26 receives radio waves from GPS satellites, and calculates the location information of its own from arrival times of the radio waves. This location detection may also be carried out by an unrepresented server connected to the network 6. Then the GPS location detector 26 sends the calculated location information (X, Y) back to the location acquirer 25.

The speed detector 27 is a part that detects a moving speed of the host mobile terminal during a period from the reproduction start time to the reproduction end time of digital television broadcasting, based on the location information outputted from the location acquirer 25. More specifically, when receiving the location information (X,Y) from the location acquirer 25, the speed detector 27 calculates a distance of displacement of the mobile terminal 2 from the location information last received, and further calculates a moving speed V on the basis of an elapsed time since the last location detection. The speed detector 27 outputs the moving speed V thus calculated, together with the location information (X,Y) to the information generator 28.

The information generator 28 is a part that generates audience information about the digital television broadcasting during the period from the reproduction start time to the reproduction end time. Namely, when receiving a trigger signal indicating a reproduction start or a reproduction end from the signal reproducer 22, the information generator 28 generates the audience information containing the program channel reproduced, the present time, the reception level and the noise level measured at the present time by the level measuring part 24, and the location information and the moving speed outputted from the speed detector 27. The information generator 28 also generates the audience information containing the program channel, and the reception level and the noise level measured by the level measuring part 24, at intervals of a fixed time T2 from the reproduction start time. Furthermore, the information generator 28 generates the audience information containing the program channel, the location information measured by the GPS location detector 26, and the moving speed detected by the speed detector 27, at intervals of a fixed time T1 from the reproduction start time. Thereafter, the information generator 28 stores the audience information generated, in association with an audience ID to specify the user of the mobile terminal 2 and with an event type indicating a type of the audience information, into the audience information storage 29.

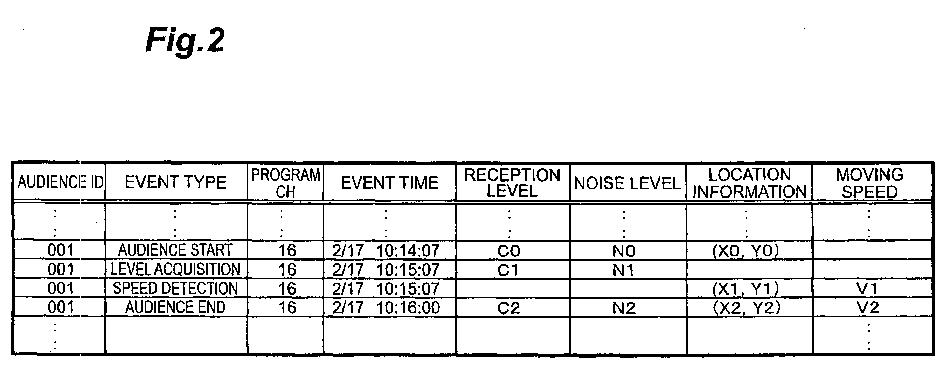

Fig. 2 is an illustration showing an example of data stored in the audience information storage 29, in a case where the location detection time intervals T1 and the level measurement time intervals T2 are defined as T1 = T2 = 60 sec. As shown in the same figure, as the audience information belonging to the event type "audience start", the reproduced program channel "16", the reproduction start time "2/17 10:14:07" as an event time, the reception level "C0 [dBm]" at the reproduction start time, the noise level "N0 [dBm]", and the location information "(X0,Y0)" are stored in association with the audience ID "001." In addition, as the audience information belonging to the event type "level acquisition" generated after passage of T1 from the reproduction start, the program channel "16", the event time "2/17 10:15:07", the reception level "C1 [dBm]" at the event time, and the noise level "N1 [dBm]" are stored in association with the audience ID "001." Likewise, as the audience information belonging to the event type "speed detection" generated after passage of T2 from the reproduction start, the program channel "16", the event time "2/17 10:15:07", the location information (X1, Y1)" at the event time, and the moving speed "V1" are stored in association with the audience ID "001." Furthermore, as the audience information generated at the reproduction end time, the audience information belonging to the event type "audience end" is also stored as including the reproduction end time "2/17 10:16:00" as an event time.

Referring back to Fig. 1, the information transmitter 30 is a part that transmits the audience information stored in the audience information storage 29, to the server apparatus 4. The timing of this transmission may be the timing when the audience information is generated by the information generator 28, the timing when a certain volume of data is accumulated in the audience information storage 29, or intervals of a fixed time. Among these transmission timings, the timing when the fixed volume of data is accumulated in the audience information storage 29 is more preferred than the timing when a certain volume of data is accumulated in the audience information storage 29, in terms of reduction of loads on the network.

Next, a configuration of the server apparatus 4 will be described.

The server apparatus 4 is a computer system (or an aggregate of computer systems) for receiving and storing the audience information transmitted from the mobile terminal 2. The server apparatus 4 incorporates a receiver (receiving means) 41, a state determiner (state determining means) 42, a movement determiner (movement determining means) 43, an information storage (information storing means) 44, a personal information storage 45, a route storage (route storing means) 46, and a program guide storage 47.

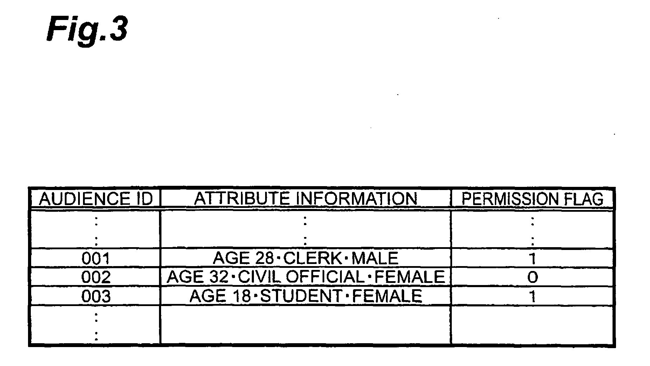

The receiver 41 is a part that receives the audience information transmitted from the mobile terminal 2. The receiver 41 outputs the received audience information to the state determiner 42 and to the movement determiner 43 and thereafter receives a quality of reception of the broadcast wave at the audience time in the mobile terminal 2, which is determined by the state determiner 42, and a state of movement of the mobile terminal 2 at the audience time, which is determined by the movement determiner 43. Furthermore, the receiver 41 also refers to the personal information storage 45 on the basis of the audience ID included in the received audience information, to retrieve personal information data with the same audience ID. When a permission flag included in the personal information data thus retrieved is "authorized", the receiver 41 acquires attribute information included in the data. Fig. 3 shows an example of data stored in the personal information storage 45. As shown in the same figure, attribute information "age 28·clerk·male" indicating attributes of a person, and a permission flag "1" indicating a status authorized/unauthorized to disclose the attribute information are stored in association with the audience ID "001" to specify the audience. For example, when the audience ID included in the audience information is "001", the receiver 41 acquires the attribute information "age 28·clerk·male", because the permission flag is "1" indicating "authorized."

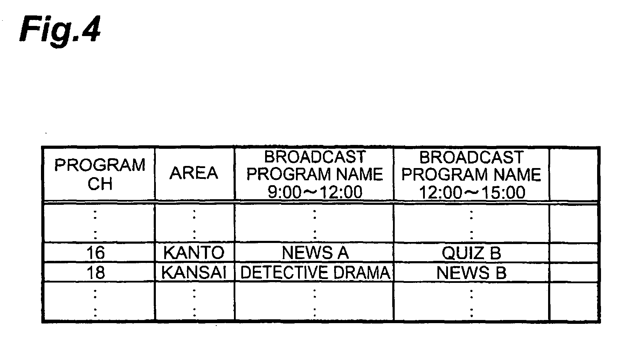

The receiver 41 also refers to the program guide storage 47 shown in Fig. 4 to specify a broadcast program name from the program channel, the event time, and the location information included in the audience information. As shown in Fig. 4, the program guide storage 47 stores broadcast program names in each time zone corresponding to program channels and areas. For example, in a case where the audience information contains the program channel "16", the event time "2/17 10:14:07", and the location information "X0, Y0" to indicate the Kanto area, the receiver 41 searches the program guide storage 47 for a broadcast program name which has the same program channel and area and the time zone of which includes the event time, and thereby specifies the broadcast program name "news A."

Returning to Fig. 1, the receiver 41 adds the attribute information, the broadcast program name, the reception quality, and the movement state to the received audience information and stores the audience information into the information storage 44. Here the receiver 41 may operate to perform a correction for time by means of a more precise clock function on the occasion of storing the event time into the information storage 44. This time correction can be implemented, for example, based on an error between the time when the mobile terminal 2 transmitted the audience information and the time when the receiver 41 received the audience information. The receiver 41 may also be configured to discard the audience information as a target if an elapsed time between the event time of the audience start and the event time of the audience end in the audience information is within a given time (e.g., 60 sec).

The state determiner 42 is a part that determines the quality of reception of the broadcast wave in the mobile terminal 2 at the event time included in the audience information, based on the reception level and the noise level included in the audience information outputted from the receiver 41. Specifically, in a case where the audience information contains the reception level C [dBm] and the noise level N [dBm], the reception quality is determined by results of comparisons of the reception level C [dBm] and the CN ratio C/N [dB] with their respective thresholds. More specifically, when Eqs (1) and (2) below are simultaneously satisfied, when Eqs (3) and (4) below are simultaneously satisfied, and when Eqs (5) and (6) below are simultaneously satisfied, it is determined that the video data and audio data both can be well reproduced and that the reception quality is "high."

$$C \geq a1 \qquad (1)$$

$$C/N \geq b1 \qquad (2)$$

$$C < a1 \qquad (3)$$

$$C/N > b2 \qquad (4)$$

$$C > a2 \qquad (5)$$

$$C/N < b1 \qquad (6)$$

[In Eqs (1)-(6), a1, a2, b1, and b2 represent preset thresholds.]

On the other hand, when Eqs (7) and (8) below or Eqs (9) and (10) below are simultaneously satisfied, the state determiner 42 determines that block noise can be generated during reproduction of the video data and that the reception quality is "low."

$$a2 \geq C > a1 \qquad (7)$$

$$b1 > C/N \qquad (8)$$

$$a1 \geq C \qquad (9)$$

$$b2 \geq C/N > b1 \qquad (10)$$

[In Eqs (7)-(10), a1, a2, b1, and b2 are preset thresholds.]

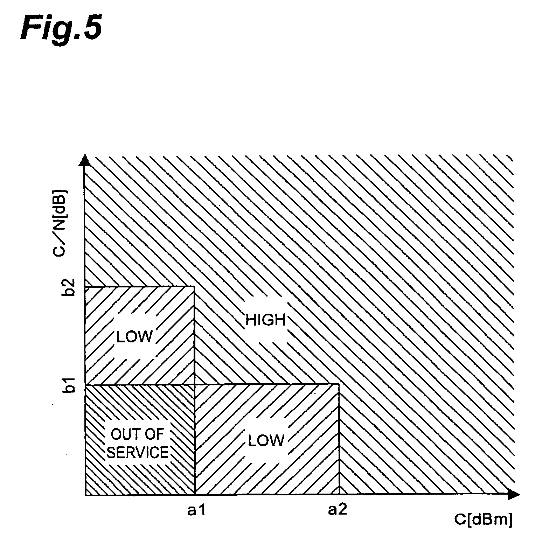

On the other hand, when Eqs (8) and (9) above are simultaneously satisfied, the state determiner 42 determines that neither of the video data and audio data can be reproduced and that the reception quality is "out of service." Fig. 5 is an illustration showing the relationship of reception levels and CN ratios with the reception qualities determined by the state determiner 42 as described above. As shown in the same figure, the reception quality is determined by a combination of the value of the reception level C with the value of the CN ratio.

Returning to Fig. 1, the movement determiner 43 is a part that determines a state of movement of the mobile terminal 2 at the event time included in the audience information, based on the location information and the moving speed included in the audience information outputted from the receiver 41 and based on geographical information data stored in the route storage 46. Here a geographical information database includes landmark information indicating locations of stations, ports, stores, etc. and also includes route information indicating routes of transportation means such as railroads, roads, and sea lanes.

A determination procedure by the movement determiner 43 will be described below in a case where the receiver 41 receives the audience information as shown in Fig. 2.

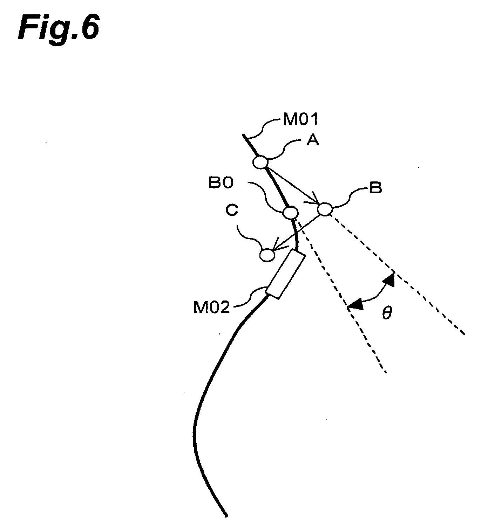

Fig. 6 is an illustration showing a positional relation between a path indicated by route information included in the geographical information database, and the mobile terminal 2. In the same figure, a route M01 represents, for example, a railway line, and the illustration means that the mobile terminal 2 is moving via point A (X0,Y0), point B (X1,Y1), and point C (X2,Y2) in order. When point A is within a predetermined tolerance from the route M01, the movement determiner 43 calculates a predicted position B0 at the event time "2/17 10:15: 07" from the moving speed V1 at point B. Then the movement determiner 43 calculates a slope θ of a tangent line at point B0 relative to a straight line connecting point A to point B. When θ is not more than a predetermined value (e.g., 30°) and when V1 is not less than a predetermined value, the movement determiner 43 determines that the state of movement of the mobile terminal 2 is "on train of railway line A" or the like. Similarly, the movement determiner 43 calculates a slope θ of a tangent line at a predicted position at the event time "2/17 10:16:00" relative to a straight line connecting point B to point C; when θ is larger than the predetermined value and when V2 is not more than the predetermined value, the movement determiner 43 adds landmark information near point C and determines that the state of movement is "walking near station B" or the like.

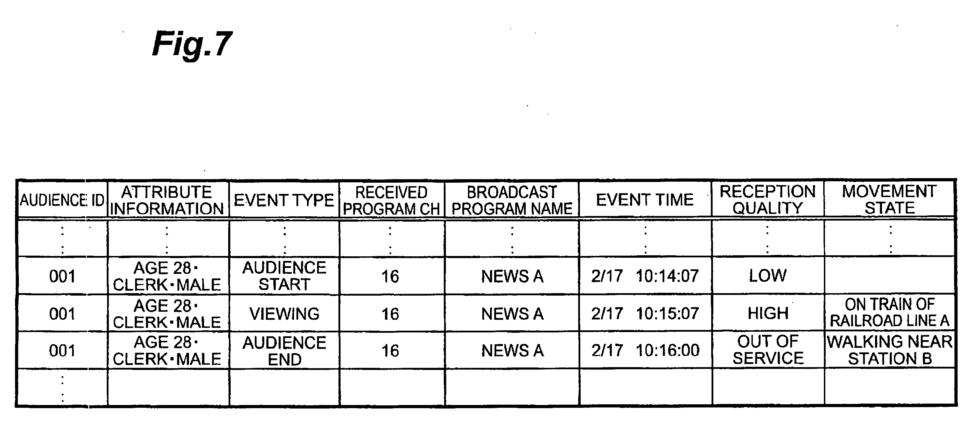

Fig. 7 is an illustration showing an example of the audience information stored in the information storage 44, after generated as described above. As shown in the same figure, the audience information about the event type "audience start" and the event time "2/17 10: 14:07" is stored in association with the audience ID "001" while being accompanied by the attribute information "age 28·clerk·male", the broadcast program name "news A", and the reception quality "low." Likewise, the audience information generated in the mobile terminal 2 up to the reproduction end time "2/17 10:16:00" is stored in the information storage 44 while being accompanied by the movement state, in addition to the attribute information, the broadcast program name, and the reception quality.

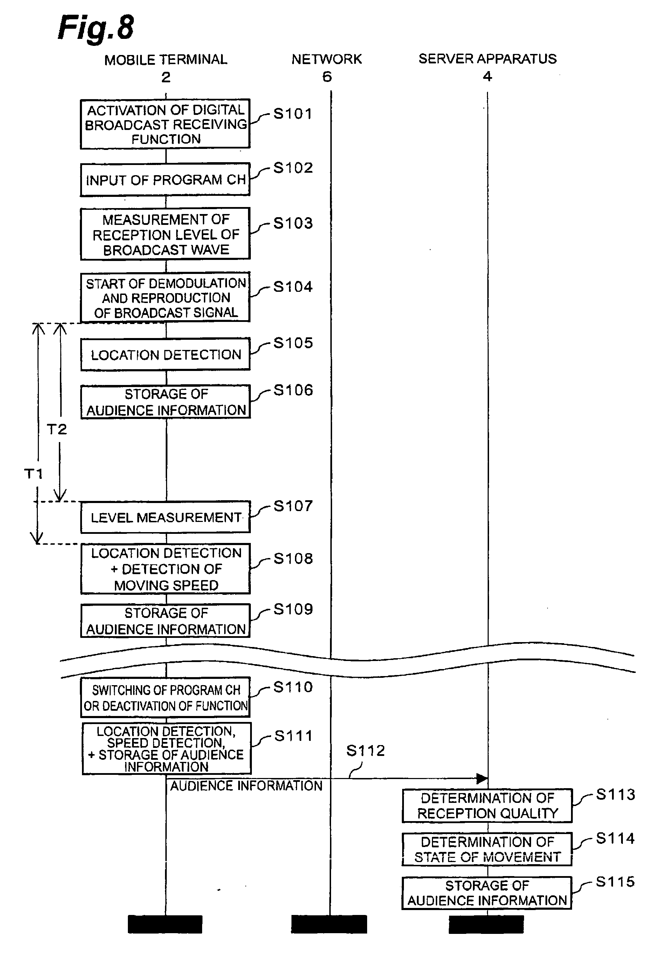

Subsequently, the operation of the audience information collection system 1 of the present embodiment will be described, together with an audience information collection method according to an embodiment of the present invention. Fig. 8 is a sequence diagram showing the operation of the audience information collection system according to the present embodiment.

First, when an audience start instruction of digital television broadcasting is accepted in the mobile terminal 2, the wave receiver 21 turns the broadcast wave receiving function on (step S101). Then an operation of selecting a channel to be viewed is accepted from an operation button or the like (step S102). With this selection operation, the wave receiver 21 receives a broadcast wave in a frequency band corresponding to the channel to be viewed, and the level measuring part 24 starts measuring the reception level and noise level of the broadcast wave (step S103).

When the wave receiver 21 starts receiving the broadcast wave, the signal reproducer 22 acquires the video data and audio data by demodulating carrier waves multiplexed on the broadcast wave, and thereafter starts reproducing those video data and audio data (step S104). With the start of reproduction of the video data and audio data, the location acquirer 25 acquires the location information of the mobile terminal 2 (step S105). Then the information generator 28 adds the reception level, noise level, and location information to the audience information belonging to the event type "audience start" and stores the audience information into the audience information storage 29 (step S106).

After the start of reproduction of digital television broadcasting as described above, the level measuring part 24 measures the reception level and noise level of the broadcast wave at an interval of the fixed time T2 (step S107). At an interval of the fixed time T1 from the start of reproduction, the location acquirer 25 acquires the location information and the speed detector 27 detects the current moving speed of the mobile terminal 2 (step S108). Thereafter, the information generator 28 generates the audience information belonging to the event type "level acquisition" and to the event type "speed detection", for the reception level and noise level measured and for the location information and the moving speed, respectively (step S109).

When an audience end instruction of digital television broadcasting or a request for switching of the program channel is accepted in the mobile terminal 2, the wave receiver 21 once terminates the reception of the broadcast wave (step S110). In conjunction therewith, the location acquirer 25 acquires the location information and the speed detector 27 also detects the moving speed on the basis of the location information. Furthermore, the level measuring part 24 measures the reception level and noise level of the broadcast wave immediately before the end of reception and thereafter the information generator 28 adds the reception level, the noise level, the location information, and the moving speed to the audience information belonging to the even attribute "audience end" and stores it into the audience information storage 29 (step S111).

The information transmitter 30 transmits the audience information stored in the audience information storage 29 as described above, to the server apparatus 4 (step S112). Thereafter, when the receiver 41 of the server apparatus receives the audience information, the attribute information and broadcast program name of the user of the mobile terminal 2 are specified. Furthermore, the state determiner 42 determines the quality of reception of the broadcast wave at each event time in the audience information (step S113). The movement determiner 43 determines the state of movement of the mobile terminal 2 at the event time (step S114). Finally, the receiver 41 adds the attribute information of the user, the broadcast program name, the reception quality, and the movement state to the received audience information and stores it into the information storage 44 (step S115).

In the audience information collection system 1 described above, the mobile terminal 2 receives a broadcast wave, thereafter demodulates and reproduces the broadcast wave, and measures the reception level and noise level of the broadcast wave. On that occasion, the mobile terminal 2 generates the audience information containing the audience time and the reception level and noise level at that time and transmits the audience information to the server apparatus 4, and the server apparatus 4 compares the ratio of the reception level and the noise level with the threshold to determine the reception quality of the wave, and stores the audience information in association with the reception quality and with the audience ID to specify the mobile terminal 2. This permits the server apparatus 4 to store and provide the wave reception situations in viewing of broadcasting according to a receiver type, a communication system, etc. in the individual mobile terminal even if the received wave environment varies in diverse ways. Namely, for example, when the audience information is transmitted to broadcast program providers or the like, it is feasible to provide substantial statistical information of the audience including information on at what reception quality a broadcast program was received during an audience period.

The mobile terminal 2 transmits the audience information containing the location information and the moving speed of its own upon viewing of broadcasting, and the server apparatus 4, after receiving the audience information, determines the state of movement of the mobile terminal 2, based on the location information and moving speed and based on the route information stored in the route storage 46, and stores the audience information in association with the movement state and with the audience ID. This makes it feasible to grasp the place where the audience received the program and the transportation means used during the viewing of the program by the user, and it permits the server apparatus 4 to store and provide statistical information containing a behavioral pattern of the audience.

[Second Embodiment]

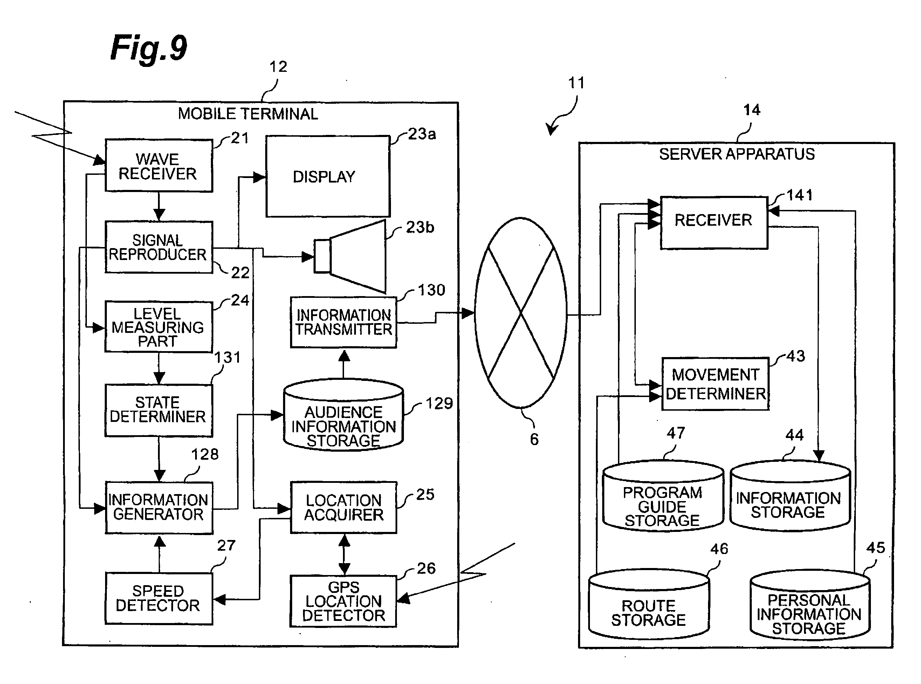

Next, the second embodiment of the present invention will be described. Fig. 9 is a schematic configuration diagram of audience information collection system 11 showing the second embodiment of the present invention. The audience information collection system 11 of the present embodiment is different from the first embodiment in that the reception quality of a broadcast wave is determined in the mobile terminal and in that the timing of transmission of the audience information from the mobile terminal to the server apparatus is different from that in the first embodiment. The differences from the first embodiment will be detailed below about the components of the audience information collection system 11.

A state determiner 131 of the mobile terminal 12 is a part that determines the quality of reception of the broadcast wave in the mobile terminal 12 at the audience time, based on the reception level and noise level of the broadcast wave measured by the level measuring part 24. This determination method is similar to that in the aforementioned state determiner 42 and thus the description thereof is omitted herein.

When receiving a trigger signal indicating a reproduction start or a reproduction end from the signal reproducer 22, the information generator 128 generates the audience information containing the reproduced program channel, the present time, the reception quality at the present time determined by the state determiner 131, and the location information and the moving speed outputted from the speed detector 27. The information generator 128 also generates the audience information containing the program channel, and the reception quality determined by the state determiner 131, at intervals of the fixed time T2 from the reproduction start time. Furthermore, the information generator 128 generates the audience information containing the program channel, the location information measured by the GPS location detector 26, and the moving speed detected by the speed detector 27, at intervals of the fixed time T1 from the reproduction start time. Thereafter, the information generator 128 stores the generated audience information in association with the audience ID to the user of the mobile terminal 12, and with the event type indicating the type of the audience information, into the audience information storage 129.

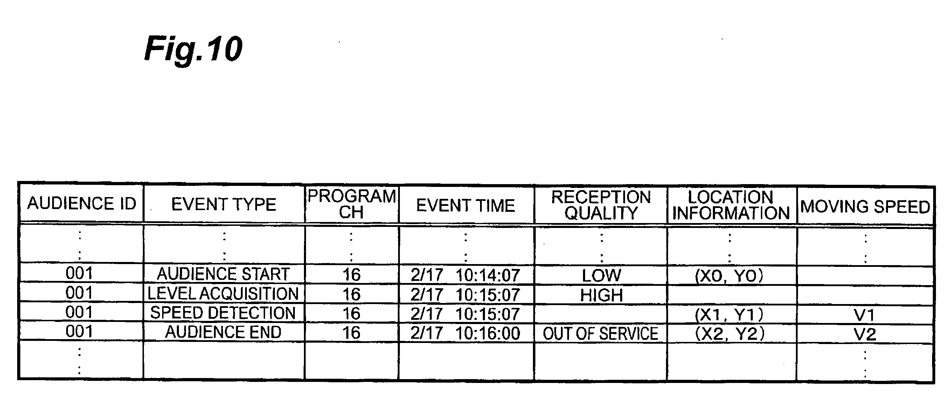

Fig. 10 is an illustration showing an example of data stored in the audience information storage 129, in a case where the location detection time intervals T1 and the level measurement time intervals T2 are defined as T1 = T2 = 60 sec. As shown in the same figure, as the audience information belonging to the event type "audience start", the reproduced program channel "16", the reproduction start time "2/17 10:14:07" as an event time, the reception quality "low" at the reproduction start time, and the location information "(X0,Y0)" are stored in association with the audience ID "001" in the audience information storage 129. In addition, as the audience information belonging to the event type "level acquisition" generated after passage of T1 from the reproduction start, the program channel "16", the event time "2/17 10: 15:07", and the reception quality "high" are stored in association with the audience ID "001" in the audience information storage 129. Similarly, as the audience information belonging to the event type "speed detection" generated after passage of T2 from the reproduction start, the program channel "16", the event time "2/17 10: 15:07", the location information "(X1,Y1)" at the event time, and the moving speed "V1" are stored in association with the audience ID "001" in the audience information storage 129. Furthermore, as the audience information generated at the reproduction end time, the audience information belonging to the event type "audience end" containing the reproduction end time "2/17 10:16: 00" as an event time is also stored.

Returning to Fig. 9, the information transmitter 130 is a part that transmits the audience information stored in the audience information storage 129, to the server apparatus 14. The transmission of the audience information herein is carried out at the timing when the information generator 128 generates the audience information.

The receiver 141 of the server apparatus 14 is a part that receives the audience information transmitted from the mobile terminal 12. The receiver 141 outputs the received audience information to the movement determiner 43 and thereafter receives a state of movement of the mobile terminal 12 at the audience time determined by the movement determiner 43. Furthermore, the receiver 141 refers to the personal information storage 45 on the basis of the audience ID included in the received audience information, to retrieve the personal information data with the same audience ID. The receiver 141 also refers to the program guide storage 47 to specify a broadcast program name from the program channel, the event time, and the location information in the audience information. Then the receiver 141 adds the attribute information, the broadcast program name, and the movement state to the received audience information and stores it into the information storage 44.

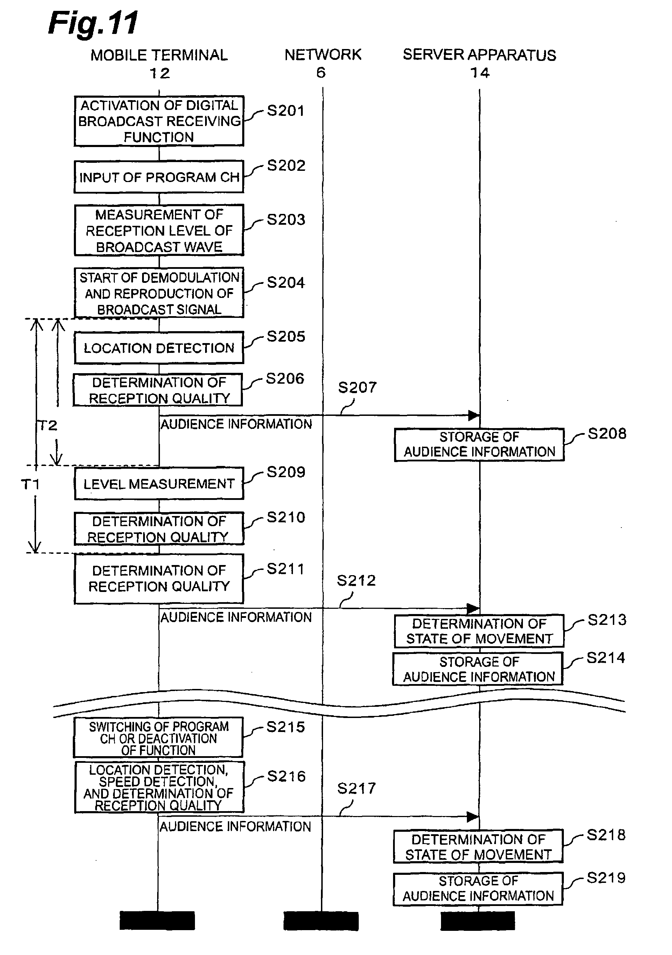

Next, the operation of the audience information collection system 11 will be described with reference to Fig. 11, while also detailing an audience information collection method in the audience information collection system 11. Fig. 11 is a flowchart showing the operation of the audience information collection system 11. The processes at steps S201-S205 in Fig. 11 are the same as the corresponding processes at steps S101-S105 (cf. Fig. 8) detailed in the first embodiment, and thus the below will describe the processes at and after step S206 different from the first embodiment.

When the level measuring part 24 receives the reception level and noise level of a broadcast wave upon a reproduction start of digital television broadcasting, the state determiner 131 determines the reception quality of the broadcast wave and transmits it to the information generator 128 (step S206). Receiving it, the information generator 128 adds the reception quality and the location information to the audience information belonging to the event type "audience start" to generate the audience information, and thereafter the information transmitter 130 transmits the audience information to the server apparatus 14 (step S207). Then the receiver 141 of the server apparatus 14 receives the audience information, adds the broadcast program name and attribute information thereto, and thereafter stores the audience information into the information storage 44 (step S208).

The state determiner 131 measures the reception level and noise level of the broadcast wave at an interval of the fixed time T2 from the reproduction start time (step S209). The state determiner 131 determines the reception quality of the broadcast wave on the basis of the reception level and noise level and sends the reception quality to the information generator 128 (step S210). In this case, the reception quality of the broadcast wave is not determined in the server apparatus 14. At an interval of the fixed time T1 from the reproduction start, the location acquirer 25 acquires the location information and the speed detector 27 detects the current moving speed of the mobile terminal 12 (step S211). In conjunction therewith, the information generator 128 generates the audience information belonging to the event type "level acquisition" with the reception quality and the audience information belonging to the event type "speed detection" with the location information and the moving speed, and thereafter the information transmitter 130 transmits those audience information to the server apparatus 14 (step S212). When the receiver 141 of the server apparatus 14 receives the audience information, the movement determiner 43 determines a state of movement of the mobile terminal 12 (step S213). Then the receiver 141 adds the attribute information of the user, the broadcast program name, and the movement state to the received audience information and stores the audience information into the information storage 44 (step S214).

Next, when an audience end instruction of digital television broadcasting or a request for switching of the program channel is accepted in the mobile terminal 12, the wave receiver 121 once terminates the reception of the broadcast wave (step S215). In conjunction therewith, the location acquirer 25 acquires the location information and the speed detector 27 also detects the moving speed on the basis of the location information. The level measuring part 24 measures the reception level and noise level of the broadcast wave immediately before the end of reception and thereafter the state determiner 131 determines the reception quality immediately before the end of reception on the basis of the measured reception level and noise level (step S216). The information generator 128 adds the reception quality, the location information, and the moving speed to the audience information belonging to the event attribute "audience end" to generate the audience information, and thereafter the information transmitter 130 transmits this audience information to the server apparatus 14 (step S217). Thereafter, the movement state determination and the audience information storage are carried out in the same manner as at steps S213-S214 on the server apparatus 14 side (steps S218-S219).

In the audience information collection system 11 as described above, the mobile terminal 12 also receives a broadcast wave, thereafter demodulates and reproduces the broadcast wave, and measures the reception level and noise level of the broadcast wave. On that occasion, the mobile terminal 12 compares the ratio of the reception level and the noise level with the threshold to determine the reception quality of the wave, thereafter generates the audience information containing the audience time and the reception quality, and transmits the audience information to the server apparatus 14, and the server apparatus 14 stores the audience information in association with the reception quality and with the audience ID to specify the mobile terminal 12. This permits the server apparatus 4 to store and provide the wave reception situations in viewing of broadcasting according to a receiver type, a communication system, etc. in the individual mobile terminal even if the received wave environment varies in diverse ways. Particularly, since the reception quality of the broadcast wave is determined in the mobile terminal, degrees of freedom for determination of the reception quality are higher.

The present invention is by no means limited to each of the above embodiments. For example, the audience information collection system may also be configured to collect and store the audience information of analog broadcasting, radio broadcasting, character broadcasting, etc. in addition to the digital television broadcasting.

The audience information collection systems 1, 11 may also be arranged so that the mobile terminal measures the electric field intensity of the broadcast wave as a reception level and the electric field intensity of noise as a noise level and transmits the audience information containing them, and operate to determine the reception quality on the basis of the audience information.

The mobile terminal may also be arranged to measure a reception power S within a fixed period of multiple carrier waves carrying one broadcast signal, as a reception level. In this case, the operation may be arranged so that a reception power N (noise level) within a fixed time of noise included in these multiple carrier waves is measured and thereafter the reception quality is determined based on the ratio of the reception powers (S/N ratio).

In the audience information collection systems 1, 11 the mobile terminal 2 or 12 was arranged to detect the moving speed of its own, but the moving speed may be detected on the server apparatus 14 side.

The audience information collection systems 1, 11 were configured to detect the location of the mobile terminal by positioning with GPS and to calculate the speed of the mobile terminal 2 or 12 from the result of the location detection, but they may also be arranged to detect the speed by a speed sensor utilizing the Doppler effect, a speed sensor utilizing a spatial filter, or the like. Furthermore, the mobile terminal may be equipped with an acceleration sensor of the seismo type, the servo type, or the like to determine the movement state on the basis of the acceleration of the mobile terminal.

The location acquirer 25 may acquire the location information of the host mobile terminal by any means other than the positioning by GPS. An example of such location information is information to specify a radio base station, such as a radio base station code, included in broadcast information broadcast from a radio base station or the like.

## Claims

1.  A mobile terminal comprising:

    wave receiving means for receiving a broadcast wave;
    signal reproducing means for acquiring a broadcast signal on the basis of the broadcast wave received by the wave receiving means, and reproducing the broadcast signal;
    level measuring means for measuring a reception level of the broadcast wave received by the wave receiving means;
    information generating means for generating audience information containing an audience time, which is a time of reproduction by the signal reproducing means, and the reception level at the audience time measured by the level measuring means; and
    information transmitting means for transmitting the audience information generated by the information generating means.

2.  The mobile terminal according to Claim1, wherein said signal reproducing means acquires a broadcast signal by demodulating the broadcast wave received by the wave receiving means.

3.  The mobile terminal according to Claim 1 or 2, wherein the level measuring means additionally measures a noise level upon reception of the broadcast wave by the wave receiving means, and
    wherein the information generating means generates the audience information containing the audience time, and the reception level at the audience time and the noise level measured by the level measuring means.

4.  A mobile terminal comprising:

    wave receiving means for receiving a broadcast wave;
    signal reproducing means for acquiring a broadcast signal on the basis of the broadcast wave received by the wave receiving means, and reproducing the broadcast signal;
    level measuring means for measuring a reception level of the broadcast wave received by the wave receiving means;
    state determining means for comparing the reception level measured by the level measuring means, with a predetermined threshold, thereby determining a quality of reception of the broadcast wave;
    information generating means for generating audience information containing an audience time, which is a time of reproduction by the signal reproducing means, and the quality of reception at the audience time determined by the state determining means; and
    information transmitting means for transmitting the audience information generated by the information generating means.

5.  The mobile terminal according to Claim4, wherein said signal reproducing means acquires a broadcast signal by demodulating the broadcast wave received by the wave receiving means.

6.  The mobile terminal according to Claim 4 or 5, wherein the level measuring means additionally measures a noise level upon reception of the broadcast wave by the wave receiving means, and
    wherein the state determining means compares a ratio of the reception level and the noise level measured by the level measuring means, with a predetermined threshold, thereby determining the quality of reception.

7.  The mobile terminal according to any one of Claims 1 to 6, further comprising location acquiring means for acquiring location information of the mobile terminal at the audience time,
    wherein the information transmitting means transmits the audience information which contains the location information acquired by the location acquiring means.

8.  The mobile terminal according to Claim 7, further comprising speed detecting means for detecting a moving speed of the mobile terminal at the audience time,
    wherein the information transmitting means transmits the audience information which contains the moving speed detected by the speed detecting means.

9.  An audience information collection system comprising:

    the mobile terminal as set forth in any one of Claims 1 to 8; and a server apparatus,

    wherein the server apparatus comprises:

    receiving means for receiving the audience information transmitted from the mobile terminal; and
    information storing means for storing the audience information received by the receiving means, in association with information to specify the mobile terminal.

10. An audience information collection system comprising: the mobile terminal as set forth in Claim 1; and a server apparatus,

wherein the server apparatus comprises:

receiving means for receiving the audience information transmitted from the mobile terminal; state determining means for comparing the reception level included in the audience information, with a predetermined threshold, thereby determining a quality of reception of the broadcast wave at the audience time specified by the audience information; and information storing means for storing the audience information received by the receiving means, in association with the quality of reception determined by the state determining means and with information to specify the mobile terminal.

11. An audience information collection system comprising: the mobile terminal as set forth in Claim 3; and a server apparatus, wherein the server apparatus comprises:

receiving means for receiving the audience information transmitted from the mobile terminal; state determining means for comparing a ratio of the reception level and the noise level included in the audience information, with a predetermined threshold, thereby determining a quality of reception of the broadcast wave at the audience time specified by the audience information; and information storing means for storing the audience information received by the receiving means, in association with the quality of reception determined by the state determining means and with information to specify the mobile terminal.

12. An audience information collection system comprising: the mobile terminal as set forth in Claim 8; and a server apparatus, wherein the server apparatus comprises:

route storing means for storing route information of transportation means; receiving means for receiving the audience information transmitted from the mobile terminal; movement determining means for determining a state of movement of the mobile terminal at the audience time specified by the audience information, based on the location information and the moving speed included in the audience information and based on the route information stored in the route storing means; and information storing means for storing the audience information received by the receiving means, in association with the state of movement determined by the movement determining means and with information to specify the mobile terminal.

13. An audience information collection method comprising:

a wave receiving step wherein a mobile terminal receives a broadcast wave; a signal reproducing step wherein the mobile terminal acquires a broadcast signal on the basis of the broadcast wave received in the wave receiving step, and reproduces the broadcast signal; a level measuring step wherein the mobile terminal measures a reception level of the broadcast wave received in the wave receiving step; an information generating step wherein the mobile terminal generates audience information containing an audience time, which is a time of reproduction in the signal reproducing step, and the reception level at the audience time measured in the level measuring step; an information transmitting step wherein the mobile terminal transmits the audience information generated in the information generating step; a receiving step wherein a server apparatus receives the audience information transmitted in the information transmitting step; and an information storing step wherein the server apparatus stores the audience information received in the receiving step, in association with information to specify the mobile terminal.

14. The audience information collection method according to Claim13, wherein said signal reproducing step acquires a broadcast signal by demodulating the broadcast wave received by the wave receiving step.

15. An audience information collection method comprising:

a wave receiving step wherein a mobile terminal receives a broadcast wave; a signal reproducing step wherein the mobile terminal acquires a broadcast signal on the basis of the broadcast wave received in the wave receiving step, and reproduces the broadcast signal; a level measuring step wherein the mobile terminal measures a reception level of the broadcast wave received in the wave receiving step; a state determining step wherein the mobile terminal compares the reception level measured in the level measuring step, with a predetermined threshold, thereby determining a quality of reception of the broadcast wave;

an information generating step wherein the mobile terminal generates audience information containing an audience time, which is a time of reproduction in the signal reproducing step, and the quality of reception at the audience time determined in the state determining step;

an information transmitting step wherein the mobile terminal transmits the audience information generated in the information generating step;

a receiving step wherein a server apparatus receives the audience information transmitted in the information transmitting step; and

an information storing step wherein the server apparatus stores the audience information received in the receiving step, in association with information to specify the mobile terminal.

16. The audience information collection method according to Claim15, wherein said signal reproducing step acquires a broadcast signal by demodulating the broadcast wave received by the wave receiving step.

## Fig.1

MOBILE TERMINAL 2

WAVE RECEIVER 21

DISPLAY 23a

SIGNAL REPRODUCER 22

23b

LEVEL MEASURING PART 24

INFORMATION TRANSMITTER 30

AUDIENCE INFORMATION STORAGE 29

INFORMATION GENERATOR 28

LOCATION ACQUIRER 25

SPEED DETECTOR 27

GPS LOCATION DETECTOR 26

SERVER APPARATUS 4

RECEIVER 41

STATE DETERMINER 42

MOVEMENT DETERMINER 43

PROGRAM GUIDE STORAGE 47

INFORMATION STORAGE 44

ROUTE STORAGE 46

PERSONAL INFORMATION STORAGE 45

1

6

EP 1 587 320 A2

## Fig.2

| AUDIENCE ID | EVENT TYPE | PROGRAM CH | EVENT TIME | RECEPTION LEVEL | NOISE LEVEL | LOCATION INFORMATION | MOVING SPEED |
|---|---|---|---|---|---|---|---|
| : | : | : | : | : | : | : | : |
| 001 | AUDIENCE START | 16 | 2/17  10:14:07 | C0 | N0 | (X0, Y0) | |
| 001 | LEVEL ACQUISITION | 16 | 2/17  10:15:07 | C1 | N1 | | |
| 001 | SPEED DETECTION | 16 | 2/17  10:15:07 | | | (X1, Y1) | V1 |
| 001 | AUDIENCE END | 16 | 2/17  10:16:00 | C2 | N2 | (X2, Y2) | V2 |
| : | | | | | | | : |

# Fig.3

| AUDIENCE ID | ATTRIBUTE INFORMATION | PERMISSION FLAG |
|---|---|---|
| : | : | : |
| : | : | : |
| 001 | AGE 28·CLERK·MALE | 1 |
| 002 | AGE 32·CIVIL OFFICIAL·FEMALE | 0 |
| 003 | AGE 18·STUDENT·FEMALE | 1 |
| : | | |
| : | | |

# Fig.4

| PROGRAM CH | AREA | BROADCAST PROGRAM NAME 9:00~12:00 | BROADCAST PROGRAM NAME 12:00~15:00 | |
|---|---|---|---|---|
| ⋮ | ⋮ | ⋮ | ⋮ | |
| 16 | KANTO | NEWS A | QUIZ B | |
| 18 | KANSAI | DETECTIVE DRAMA | NEWS B | |
| ⋮ | ⋮ | ⋮ | ⋮ | |

# Fig.5

# Fig.6

# Fig.7

| AUDIENCE ID | ATTRIBUTE INFORMATION | EVENT TYPE | RECEIVED PROGRAM CH | BROADCAST PROGRAM NAME | EVENT TIME | RECEPTION QUALITY | MOVEMENT STATE |
|---|---|---|---|---|---|---|---|
| ⋮ | ⋮ | ⋮ | ⋮ | ⋮ | ⋮ | ⋮ | ⋮ |
| 001 | AGE 28· CLERK·MALE | AUDIENCE START | 16 | NEWS A | 2/17 10:14:07 | LOW | |
| 001 | AGE 28· CLERK·MALE | VIEWING | 16 | NEWS A | 2/17 10:15:07 | HIGH | ON TRAIN OF RAILROAD LINE A |
| 001 | AGE 28· CLERK·MALE | AUDIENCE END | 16 | NEWS A | 2/17 10:16:00 | OUT OF SERVICE | WALKING NEAR STATION B |
| ⋮ | | | | | | | |

# Fig.8

| MOBILE TERMINAL 2 | NETWORK 6 | SERVER APPARATUS 4 |
|---|---|---|

ACTIVATION OF DIGITAL BROADCAST RECEIVING FUNCTION — S101

INPUT OF PROGRAM CH — S102

MEASUREMENT OF RECEPTION LEVEL OF BROADCAST WAVE — S103

START OF DEMODULATION AND REPRODUCTION OF BROADCAST SIGNAL — S104

LOCATION DETECTION — S105

STORAGE OF AUDIENCE INFORMATION — S106

T2

T1

LEVEL MEASUREMENT — S107

LOCATION DETECTION + DETECTION OF MOVING SPEED — S108

STORAGE OF AUDIENCE INFORMATION — S109

SWITCHING OF PROGRAM CH OR DEACTIVATION OF FUNCTION — S110

LOCATION DETECTION, SPEED DETECTION, + STORAGE OF AUDIENCE INFORMATION — S111

S112

AUDIENCE INFORMATION

DETERMINATION OF RECEPTION QUALITY — S113

DETERMINATION OF STATE OF MOVEMENT — S114

STORAGE OF AUDIENCE INFORMATION — S115

## Fig.9

**MOBILE TERMINAL** (12)

- WAVE RECEIVER (21)
- SIGNAL REPRODUCER (22)
- DISPLAY (23a)
- (23b)
- LEVEL MEASURING PART (24)
- INFORMATION TRANSMITTER (130)
- STATE DETERMINER (131)
- AUDIENCE INFORMATION STORAGE (129)
- INFORMATION GENERATOR (128)
- LOCATION ACQUIRER (25)
- SPEED DETECTOR (27)
- GPS LOCATION DETECTOR (26)

(6) (11)

**SERVER APPARATUS** (14)

- RECEIVER (141)
- MOVEMENT DETERMINER (43)
- PROGRAM GUIDE STORAGE (47)
- INFORMATION STORAGE (44)
- ROUTE STORAGE (46)
- PERSONAL INFORMATION STORAGE (45)

## Fig.10

| AUDIENCE ID | EVENT TYPE | PROGRAM CH | EVENT TIME | RECEPTION QUALITY | LOCATION INFORMATION | MOVING SPEED |
|---|---|---|---|---|---|---|
| : | : | : | : | : | : | : |
| 001 | AUDIENCE START | 16 | 2/17  10:14:07 | LOW | (X0, Y0) | |
| 001 | LEVEL ACQUISITION | 16 | 2/17  10:15:07 | HIGH | | |
| 001 | SPEED DETECTION | 16 | 2/17  10:15:07 | | (X1, Y1) | V1 |
| 001 | AUDIENCE END | 16 | 2/17  10:16:00 | OUT OF SERVICE | (X2, Y2) | V2 |
| : | | | | | | : |

## *Fig.11*

| MOBILE TERMINAL 12 | NETWORK 6 | SERVER APPARATUS 14 |
|---|---|---|

ACTIVATION OF DIGITAL BROADCAST RECEIVING FUNCTION — S201

INPUT OF PROGRAM CH — S202

MEASUREMENT OF RECEPTION LEVEL OF BROADCAST WAVE — S203

START OF DEMODULATION AND REPRODUCTION OF BROADCAST SIGNAL — S204

LOCATION DETECTION — S205

DETERMINATION OF RECEPTION QUALITY — S206

S207
AUDIENCE INFORMATION

STORAGE OF AUDIENCE INFORMATION — S208

T2

T1

LEVEL MEASUREMENT — S209

DETERMINATION OF RECEPTION QUALITY — S210

DETERMINATION OF RECEPTION QUALITY — S211

S212
AUDIENCE INFORMATION

DETERMINATION OF STATE OF MOVEMENT — S213

STORAGE OF AUDIENCE INFORMATION — S214

SWITCHING OF PROGRAM CH OR DEACTIVATION OF FUNCTION — S215

LOCATION DETECTION, SPEED DETECTION, AND DETERMINATION OF RECEPTION QUALITY — S216

S217
AUDIENCE INFORMATION

DETERMINATION OF STATE OF MOVEMENT — S218

STORAGE OF AUDIENCE INFORMATION — S219